# EUROPÄISCHE PATENTSCHRIFT

(11) **EP 1 343 665 B1**
(45) Veröffentlichungstag und Bekanntmachung des Hinweises auf die Patenterteilung: **06.09.2006**
(21) Anmeldenummer: 01989529.1
(22) Anmeldetag: 28.11.2001
(51) Int. Cl.: B60R 25/00, B60R 25/04

(54) **SCHLIEßSYSTEM FÜR KRAFTFAHRZEUGE**
CLOSING SYSTEM FOR MOTOR VEHICLES
SYSTEME DE FERMETURE DESTINE A DES VEHICULES

(30) Priorität: 22.12.2000 DE 10064546
(43) Veröffentlichungstag der Anmeldung: 17.09.2003
(73) Patentinhaber: Huf Hülsbeck & Fürst GmbH & Co. KG, 42551 Velbert (DE)
(72) Erfinder: MÜLLER, Ulrich, 42549 Velbert (DE)
(74) Vertreter: Mentzel, Norbert
(86) Internationale Anmeldenummer: PCT/EP2001/013883
(87) Internationale Veröffentlichungsnummer: WO 2002/051676

(56) Entgegenhaltungen:
- DE-A- 19 823 122
- DE-A- 19 846 452
- DE-C- 19 643 020

## Beschreibung

Die Erfindung richtet sich auf ein Schließsystem der im Oberbegriff des Anspruches 1 angegebenen Art. Die Zugangsberechtigung wird von Kommunikationsmitteln ermittelt, deren stationäre Teile im Fahrzeug angeordnet sind und deren mobile Teile in einem drahtlosen Handtelefon integriert sind, das nachfolgend kurz "Handy" bezeichnet werden soll. Eine solche Kommunikation wird als "keyless-entry" bezeichnet.

Bei dem bekannten Schließsystem dieser Art (DE 198 23 122 A1) werden Nachrichten von einer im Fahrzeug vorgesehenen Sende-/Empfangseinheit zu einem Handy gegeben, in Abhängigkeit von Ausgangssignalen, von Steuergeräten, die im Fahrzeug angeordnet sind. Diese Nachrichten werden alternativ vom Handy zur Sende- und Empfangseinheit im Fahrzeug übermittelt, um Funktionen von Steuergeräten im Fahrzeug zu veranlassen, nämlich einer Zentralverriegelung, einer Wegfahrsperre, einer Klimaanlage oder einem Öffner für ein Garagentor. Es ist weder eine Nah-Kommunikation vorgesehen, noch der Start des Motors über das Handy möglich. Diese Nah-Kommunikation soll nachfolgend kurz "blue-tooth-Technik" bezeichnet werden.

Es ist bekannt (US 6 092 133 A), eine sogenannte "SIM-Karte" (subscriber identity module) zu verwenden, mit welcher der telefonische Betrieb des Handys in einem Betriebsnetz ermöglicht wird. Die SIM-Karte kontrolliert die Berechtigung und dient zur Abrechnung des Telefonbetriebs gegenüber dem Netzbetreiber.

Es ist auch schon bekannt, SIM-Modul-Karten mit benutzerindividuellen Einstelldaten von Ausrüstungsteilen in Fahrzeugen in Fahrzeugschlüssel zu integrieren, welche zum Verschließen der Schlösser im Fahrzeug dienen (EP 0 846 822 A2). Diese Karten werden in den Kopf des Schlüssels integriert und wirken wie ein Transponder bei üblichen elektrischen Schlüsseln. Eine Blue-tooth-Technik ist nicht vorgesehen. Zum Starten und zum Betrieb des Motors im Fahrzeug dient der Schlüssel selbst.

Es gibt zahlreiche andere Schließsysteme, die ohne Blue-tooth-Technik arbeiten. So ist es bei einem solchen System anderer Art bekannt (DE 198 38 129 A1) im Gehäuse des Handys einen Transponder vorzusehen, welcher die Daten für die Zugangsberechtigung beinhaltet. Dieser Transponder wirkt als eine Art elektronischer Schlüssel für das Schließsystem. Es findet ein Datenaustausch mit der Basisstation im Fahrzeug statt. Nach erfolgreich abgeschlossenem Zugangskontroll-Protokoll spricht das Zugangsberechtigungssystem an und gibt die Türen bzw. Klappen im Fahrzeug zur Betätigung frei.

Bei einem Verfahren zur schlüssellosen Betätigung einer Türschließeinrichtung von Fahrzeugen (DE 199 39 064 Al) wurde vorgeschlagen, einen Mobilfunk-Datenübertragungskanal dazu zu verwenden, um ein erstes Fernbedienungssignal aus großer Entfernung abzugeben. Erst bei Annäherung eines Handys mit einem darin integrierten Transponder wird eine zweite Signalverbindung zum Fahrzeug hergestellt und erst dadurch die Entriegelungsfunktion ausgeführt.

Eine Wegfahrsperre für Fahrzeuge wird über ein Handy betrieben (DE 196 43 020 Cl). Um die Sicherheit zu erhöhen, wurde im Schaltkreis zur Identifikation des Eingangssignals eine Telefoneinheit integriert, die mit dem Handy kommuniziert. Ein Freigabesignal ist nur möglich, wenn ein ordnungsgemäß angemeldetes Handy mit dieser Einheit verbunden ist. Es gibt auch ein auf dieser Weise wirksames Verfahren zur Wegfahrsicherung von Fahrzeugen (EP 0 914 994 Al). Ein Öffnen oder Schließen von Türen ist mit diesen bekannten Handys nicht möglich gewesen.

Bei einem zugriffbeschränkten System (DE 198 46 452 Al) ist es bekannt, in Abhängigkeit von Identifizierungs-Informationen eines Benutzers zu beurteilen, ob der Benutzer zur Benutzung des zugriffsbeschränkten Systems berechtigt ist oder nicht. Diese Informationen werden von einem dem berechtigten Benutzer gehörenden Mobiltelefon abgeleitet. Diese Informationen sind auf der SIM-Karte des Mobiltelefons gespeichert. Dadurch kann die Identität des Benutzers festgestellt und die Zugriffsberechtigung zuverlässig beurteilt werden. Dann sollen nur bestimmte Funktionen des Fahrzeugs für den Benutzer freigegeben werden. Informationsübertragung konnte zwar auch mit einer Blue-tooth- Technik erfolgen, diese erfasst aber nicht eine Fahrberechtigung, wie das Starten und den Betrieb des Motors.

Der Erfindung liegt die Aufgabe zugrunde, ein zuverlässiges Schließsystem der im Oberbegriff des Anspruches 1 genannten Art zu entwickeln, mit dem sämtliche Funktionen im Fahrzeug über ein Handy erledigt werden können. Dies wird erfindungsgemäß durch die im Anspruch 1 angeführten Maßnahmen erreicht, denen folgende besondere Bedeutung zukommt.

Bei der Erfindung wird die SIM-Karte eines Handys einer neuen Funktion zugeführt. Die SIM-Karte ist bei der Erfindung zugleich der Träger, der die Zugangsberechtigungsdaten für die Kommunikation zwischen dem Fahrzeug und dem Handy beinhaltet. Außerdem kann diese SIM-Karte auch die Fahrberechtigungsdaten für das Fahrzeug umfassen. Bei der Erfindung erwirbt der Käufer eines Fahrzeugs beim Autohändler anstelle oder zusätzlich zum Schlüsselsatz für das Fahrzeug eine SIM-Karte, welche nicht nur den Telefonbetrieb für ein Handy sicherstellt, sondern auch die Zugangs- und/oder die Fahrberechtigung für dieses Fahrzeug beinhaltet. Der Fahrzeugbesitzer braucht diese SIM-Karte nur in sein Handy einzulegen, was ihm die telefonische Nutzung erlaubt und nebenher automatisch auch den Zugang zu diesem Fahrzeug oder den Betrieb dieses Fahrzeugs gestattet. Das Handy arbeitet nämlich im GHz-Bereich mit einer bidirektionalen Nah-Kommunikation in einer Freisprechanlage im Fahrzeug, wenn der Besitzers des Handys im Fahrzeug eine telefonische Nutzung wünscht. Diese für den Telefonverkehr bestimmte Nah-Kommunikation sorgt zugleich für die Übertragung der auf der SIM-Karte gespeicherten Zugangs- und Fahrberechtigungsdaten.

Weil im Fahrzeug äußere und innere Kommunikationsmittel vorgesehen sind, die erkennen, ob das Handy sich im Außenraum befindet oder im Fahrzeuginneren angeordnet ist, werden, in Abhängigkeit davon unterschiedliche Funktionen ausgelöst. Die SIM-Karte beinhaltet nämlich, wie gesagt, neben Zugangsberechtigungsdaten auch noch fahrzeugspezifische Fahrberechtigungsdaten zum Wirksamsetzen der Motorelektronik, zum Start und zum Betrieb des Motors.

Nähert sich der Berechtigte mit seinem Handy dem Fahrzeug, so sprechen die äußeren Kommunikationsmittel auf die Daten der Zugangsberechtigung in der SIM-Karte an, wodurch die Verschlüsse an den Türen entsichert werden. Die Motorelektronik bleibt zunächst abgeschaltet. Befindet sich der Berechtige mit seinem Handy im Fahrzeuginneren, so wird dies erkannt und erst dann die inneren Kommunikationsmittel über die Blue-tooth-Technik wirksam gesetzt. Jetzt werden die Fahrberechtigungsdaten der SIM-Karte abgelesen, wodurch die Motorelektronik erst dann wirksam gesetzt wird. Jetzt ist ein Start und der Betrieb des Motors möglich. Zu Fehlbedienungen kann es nicht kommen, weil der Verschluss an den Türen von den inneren Kommunikationsmittel nicht beeinflussbar ist. Der Berechtigte kann über sein Handy natürlich auch Telefongespräche vom Fahrzeuginneren aus_führen. Ein elektronischer Schlüssel zum Betrieb des Motors ist nicht mehr erforderlich.

Von besonderem Vorteil ist es, die äußeren Kommunikationsmittel in den Türgriff der Tür oder Klappe zu integrieren. Diese Bereiche ragen nämlich am weitesten aus dem Fahrzeug heraus. Deshalb findet ein Austausch der Zugangsberechtigungsdaten bereits dann statt, wenn die Hand des Berechtigten, der das Handy bei sich trägt, in den Bereich des Griffs gelangt. Der Datenaustausch im GHz-Bereich findet so schnell statt, dass der Handybesitzer davon gar nicht merkt.

Die inneren Kommunikationsmittel dagegen sollten in einer Halterung des Handys integriert sein, die sich im Fahrzeuginneren befindet. Weitere Maßnahmen und Vorteile der Erfindung ergeben sich aus der nachfolgenden Beschreibung und den Zeichnungen. In den Zeichnungen ist die Erfindung schematisch in einem Ausführungsbeispiel dargestellt. Es zeigen:
- Fig. 1: die schematische Draufsicht auf ein Handy für das erfindungsgemäße Schließsystem,
- Fig. 2: die Ansicht der von einem Autohändler an den Fahrzeughalter überreichten Betriebsmittel für das Fahrzeug, die auch die Nutzung des in Fig. 1 gezeigten Handys erlauben und
- Fig.3: schematisch die Wirkungsweise des erfindungsgemäßen Schließsystems bei einem Automobil.

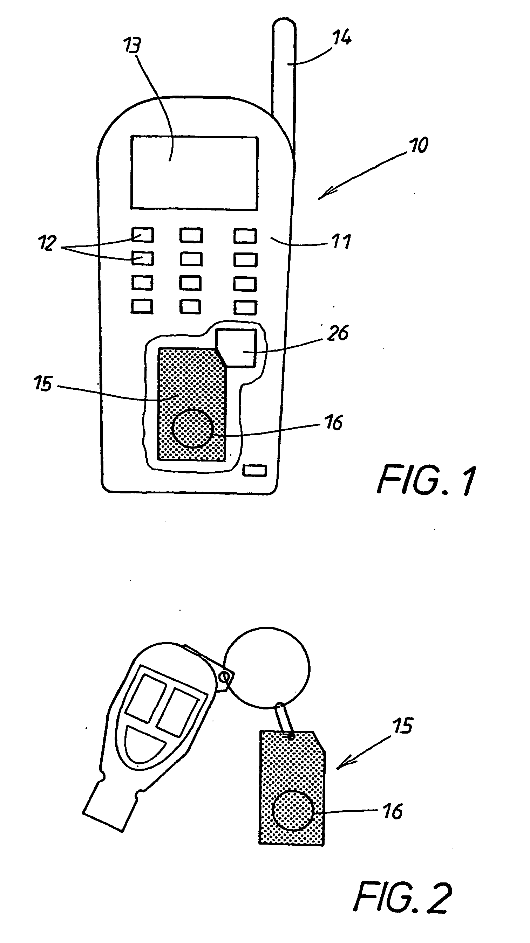

Fig. 1 zeigt schematisch den wesentlichen Aufbau eines Handtelefons, das, wie gesagt, nachfolgend kurz "Handy 10" bezeichnet werden soll. Im Gehäuse 11 des Handy 10 befindet sich eine Tastatur 12 und ein Anzeigefenster 13, die für den telefonischen Betrieb genutzt werden. Der telefonische Betrieb erfolgt mittels einer am Gehäuse 11 vorgesehene Antenne 14 über ein Betriebsnetz, zu dessen Nutzung der Erwerb einer bestimmten sogenannten SIM-Karte 15 erforderlich ist. Die SIM-Karte 15 wird in eine definierte, nicht näher gezeigte Aufnahme im Gehäuse 11 eingeführt. Erst dann ist die telefonische Nutzung des Handys 10 in dem zugehörigen Betriebsnetz möglich. Dazu dienen die üblichen, nicht näher gezeigten Energiequellen im Handy 10, z.B. Batterien und die Telefonelektronik, was nicht näher gezeigt ist.

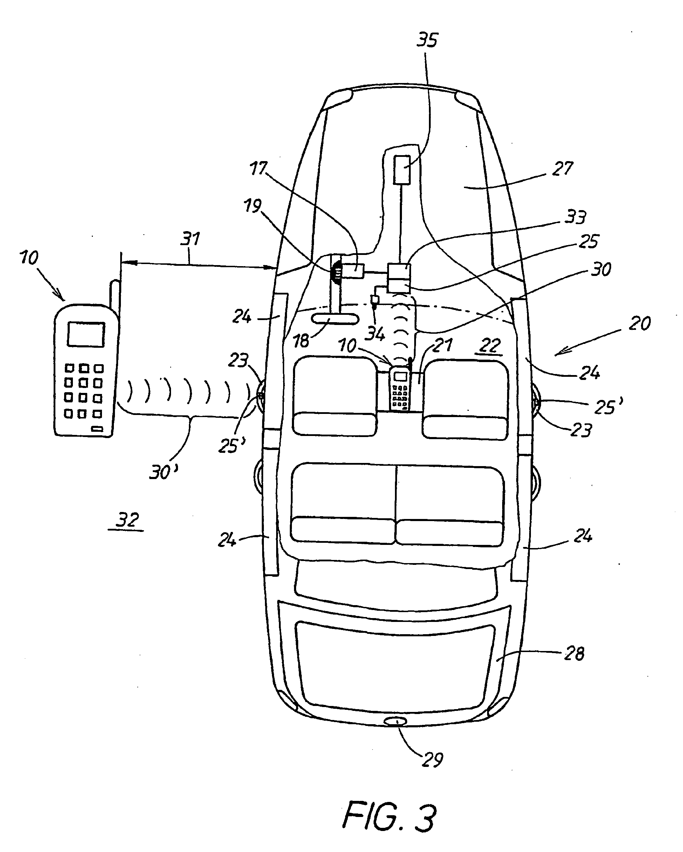

Fig. 3 zeigt ein Kraftfahrzeug 20, das im Fahrzeuginneren 22 eine Ablage 21 für das Handy 10 aufweist. Das Fahrzeug 20 ist mit einer Freisprechanlage versehen, die eine im GHz-Bereich arbeitende bidirektionale, durch eingezeichnete Wellen verdeutlichte, Nah-Kommunikation 30 mit einer im Fahrzeug 10 angeordneten stationären Sende- und Empfangseinheit 25 erlaubt. Das Handy 10 besitzt, wie in Fig. 1 angedeutet ist, eine entsprechende mobile im GHz-Bereich arbeitende Sende- und Empfangseinheit 26, die bis zu einer definierten Reichweite mit der stationären Einheit 25 kommunizieren kann. Diese Kommunikation könnte auch über die Antenne 14 erfolgen, die für den normalen Telefonbetrieb bestimmt ist. Über diese Nah-Kommunikation 30 ist, wie gesagt, der Telefonbetrieb möglich.

Bei der Erfindung ist die SIM-Karte 15 zugleich Träger von für das Fahrzeug 20 spezifischen Daten, die auf dem durch einen Kreis in Fig. 1 und 2 symbolisch angedeuteten Datenfeld 16 sich befinden. Diese Daten umfassen eine Zugangsberechtigung zum Fahrzeug, vorteilhaft aber zugleich auch Daten für die Fahrberechtigung des Fahrzeugs 20. Das wird anhand der Fig. 3 näher erläutert.

Die Fig. 3 zeigt mehrere Türen 24 am Fahrzeug 20, eine Motorhaube 27 und eine Heckklappe 28. Diese Zugangsmittel 24, 27, 28 sind bei abgestelltem Fahrzeug 20 durch übliche, nicht näher gezeigte Verschlüsse verriegelt, weshalb eine manuelle Betätigung der zugehörigen Türaußengriffe 23 und Heckklappen-Betätigungen 29 zunächst nicht möglich ist. Diese Verschlüsse arbeiten nach dem sogenannten "keyless-entry-system", wobei allerdings das Handy 10 der Datenträger ist. Wie bereits erwähnt wurde, liegt die Besonderheit darin, dass solche Zugangsberechtigungsdaten im erwähnten Datenfeld 16 der SIM-Karte 15 des Handy mit aufgenommen sind. Die Übermittlung der Daten 16 erfolgt wieder im GHz-Bereich durch eine Nah-Kommunikation. Dazu dienen außer den mobilen Einheiten 26 im Handy 10 zweckmäßigerweise auch im Außenbereich 32 des Fahrzeugs 20 angedeutete äußere S ende- und Empfangseinheiten 25' , die z.B. in den Türaußengriffen 23 der Vordertüren mit integriert sind. Nähert sich der Berechtigte mit seinem Handy 10 dem Fahrzeug 20 auf eine bestimmte Distanz 31 so sprechen diese Einheiten 25' an und es findet wieder eine durch Wellen angedeutete Nah- Kommunikation 30' zwischen dem Handy 10 und dem Fahrzeug 20 statt. Diese äußeren Einheiten 25' sind ebenso wie die vorerwähnten, im Fahrzeuginneren 22 befindlichen Einheiten 25 mit einer symbolisch angedeuteten Steuerung 33 im Fahrzeug 20 in Verbindung. Führt die Kommunikation 30' zu einer Übereinstimmung der Daten zwischen den Daten 16 im Handy 10 und den in der Steuerung 33 vorgegebenen fahrzeugspezifischen Daten, so werden die Verschlüsse entsichert.

Ein solcher Datenaustausch kann bereits bei Annäherung an das Fahrzeug 20 bewirkt werden. Günstiger ist es, diesen Austausch erst dann vorzunehmen, wenn der Handy-Besitzer die Hand in den Bereich des Türaußengriffs 23 gebracht hat. Der Datenaustausch im GHz-Bereich erfolgt so schnell, dass der Handy-Besitzer dies bei der Betätigung des Türgriffs 23 gar nicht merkt. Wenn er den Griff 23 wie üblich betätigt, läuft zunächst die Nah-Kommunikation 30' ab, die Steuerung 33 gibt die Verschlüsse frei und die Griffbetätigung entriegelt die Tür bzw. Klappe 28. Der Handy-Besitzer kann dann mittels des Türgriffs 23 die Tür 24 öffnen und ins Fahrzeuginnere 22 einsteigen.

Wie bereits erwähnt wurde, umfasst die SIM-Karte 15 im Datenfeld 16 auch Fahrberechtigungsdaten. Im Fahrzeuginneren 22 kann der Handy-Besitzer das Handy 10 entweder in seiner Kleidung belassen oder zweckmäßig erweise auf der Ablage 21 positionieren. In beiden Fällen wird im Fahrzeuginneren 22 die bereits erwähnte Nah-Kommunikation 30 für den Telefonbetrieb wirksam. Diese Nah-Kommunikation 30 wird nun erfindungsgemäß auch dafür verwendet, um die Daten für die Fahrberechtigung aus der SIM-Karte 15 des Handy 10 zu übertragen. Dafür ist die erwähnte innere Sende- und Empfangseinheit 25 im Fahrzeuginneren 22 maßgeblich.

Die von der Sende- und Empfangseinheit 25 beaufschlagte Steuerung 33 kann eine ganze Schar weiterer Funktionen im Fahrzeug wirksam- und unwirksamsetzen. Dazu gehört z.B. eine von der Steuerung 33 beaufschlagte Verriegelungseinheit 17 für die Lenkung 18 des Kraftfahrzeugs 20. Diese Verriegelungseinheit 17 setzt einen Sperrbolzen 19 gegenüber der Lenksäule entweder wirksam oder unwirksam. Im Normalfall, bei ruhendem Fahrzeug 20 ist die Lenkung 18 über den Sperrbolzen 19 blockiert. Im Fahrzeuginneren 22, z.B. am Armaturenbrett, ist eine betätigbare Handhabe 34 vorgesehen, die mit der Steuerung 33 verbunden ist. Wenn der berechtigte Handy-Besitzer die Handhabe 34 aus ihrer Nullstellung in eine erste Arbeitsstellung überführt, so kann - falls das nicht schon vorausgehend abgelaufen ist - spätestens dann eine Datenabfrage über die innere Nah-Kommunikation 30 gestartet werden und im Erfolgsfall die Bedienung der Handhabe 34 wirksam machen.

Eine erste Folge der Betätigung dieser Handhabe 34 ist die Umsteuerung der Verriegelungseinheit 17. Der Sperrbolzen 19 wird unwirksam gesetzt und gibt die Lenkung 18 frei. Eine weitere Folge ist das Einschalten des elektrischen Systems im Fahrzeug 20, z.B. Einschalten der elektrischen Versorgung der verschiedenen elektrischen Geräte im Fahrzeug 20, z.B. einem Autoradio.

Nach dieser erfolgreichen Datenabfrage über den Nah-Kommunikation 30 ist auch die weitere Betätigung der Handhabe 34 zur Ansteuerung der übrigen Funktionen der Fahrberechtigung erfolgreich. So kann z.B. in einer zweiten, und dritten Arbeitsstellung der Handhabe 34 nicht nur die Motorelektronik wirksamgesetzt, sondern schließlich auch der Motor gestartet werden. Dies läuft in üblicher Weise ab. Die dazu erforderlichen Betriebsmittel 35 sind, wie Fig. 3 symbolisch verdeutlicht, auch mit der Zentralsteuerung 33 verbunden.

Durch gegenläufige Betätigung der Handhabe 34 lassen sich die Betriebsmittel 35 für den Motor wieder stufenweise abschalten. Erst wenn der Motor still steht, wirkt die Zentralsteuerung 33 auf die Verriegelungseinheit 17 ein und setzt den dortigen Sperrbolzen 19 an der Lenkung 18 wirksam. Auch dieser Vorgang kann mit der Datenabfrage über die beschriebene Nah-Kommunikation 30 erfolgen.

Verlässt der Handy-Besitzer das Fahrzeuginnere 22 und gelangt er mit seinem Handy 10 ins Fahrzeugäußere 32, so kann über die beschriebenen Wirkungen im äußeren Nah-Kommunikationsbereich und die äußeren Einheiten 25' auch wieder eine Sicherung der Tür 24 und Klappen 28 vom Fahrzeug 20 erfolgen. Das kann automatisch oder durch Betätigen einer entsprechenden Taste. z.B. am Handy 10., geschehen. Auch dabei wird die Datenabfrage im Datenfeld 16 der SIM-Karte 15 enthaltenen Informationen wirksamgesetzt. Das abgestellte Fahrzeug 20 ist gegenüber einem Zugang von Unbefugten und einer Betätigung durch Unbefugte, die nicht dieses Handy 10 mit der fahrzeugspezifischen SIM-Karte 15 besitzen, geschützt.

### Bezugszeichenliste:

- 10: Handtelefon, Handy
- 11: Gehäuse
- 12: Tastatur von 10
- 13: Anzeigefenster von 10
- 14: Antenne von 10
- 15: SIM-Karte von 10
- 16: Datenfeld in 15, Daten für 20
- 17: Verriegelungseinheit für 18
- 18: Lenkung von 20
- 19: Sperrbolzen bei 17
- 20: Kraftfahrzeug
- 21: Ablage in 20 für 10
- 22: Fahrzeuginneres
- 23: Türaußengriff
- 24: Tür an 20
- 25: stationäre innere Sende- und Empfangseinheit in 20
- 25': Stationäre äußere Sende- und Empfangseinheit von 20
- 26: mobile Sende- und Empfangseinheit in 10
- 27: Motorhaube von 20
- 28: Heckklappe von 20
- 29: Betätigung von 28
- 30: innere Nah-Kommunikation zwischen 10, 25
- 30': äußere Nah-Kommunikation zwischen 10, 25'
- 31: Distanz zwischen 10, 20 für 30'
- 32: Fahrzeug-Außenraum
- 33: Steuerung, Zentralsteuerung in 20
- 34: Handhabe für Motor von 20
- 35: Betriebsmittel vom Motor in 20

## Patentansprüche

1. Schließsystem für Kraftfahrzeuge (20)
mit einem Zugangsberechtigungssystem zum Entsichern bzw. Sichern von Türen (24), Klappen (28, 27) im Fahrzeug (20),
mit einem Fahrberechtigungssystem zum Starten, zum Betrieb und zum Stoppen eines Motors im Fahrzeug (20) und gegebenenfalls zum Wirksam- und Unwirksamsetzen einer Lenkung (18) des Fahrzeugs (20)
und mit einer Steuerung (33) für beide Systeme, welche von Kommunikationsmitteln betrieben werden,
wobei die Kommunikationsmittel aus einer stationären/ Sende- und Empfangseinheit (25, 25') am Fahrzeug (20) und aus einer mobilen Sende- und Empfangseinheit in einem drahtlosen Handtelefon bestehen, das nachfolgend Handy (10) genannt werden soll,
und die Steuerung (33) die übermittelten Daten überprüft und im Erfolgsfall das zugehörige System wirksam bzw. unwirksam setzt,
mit einer SIM-Karte (15) für den telefonischen Netzbetrieb des Handys (10), welche in das Gehäuse des Handys (10) einführbar und bedarfsweise daraus wieder entnehmbar ist,
**dadurch gekennzeichnet,**
**dass** die SIM-Karte (15) zugleich der Träger für die Zugangsberechtigungsdaten (16) der Kommunikation ist,
**dass** im Fahrzeug (20) eine Freisprechanlage für eine im GHz-Bereich arbeitende bidirektionale Nah-Kommunikation des Handys (10) angeordnet ist,
**dass** außer äußeren Kommunikationsmitteln (25') am Fahrzeug, welche auf die Außenraum-Position des Handys (10) ansprechen,
noch innere Kommunikationsmittel (25) im Fahrzeuginneren (22) angeordnet sind, welche die Innenraum-Position des Handys (10) erkennen,
**dass** auf der SIM-Karte (15) neben den Zugangsberechtigungsdaten auch fahrzeugspezifische Fahrberechtigungsdaten (16) zum Wirksamsetzen der Motorelektronik, zum Start- und zum Betrieb des Motors angeordnet sind,
und **dass** die Fahrberechtigungsdaten (16) der SIM-Karte (15) mittels der im GHz-Bereich arbeitenden Netzkommunikation des Handys (10) aufgenommen und ausgewertet werden.

2. Schließsystem nach Anspruch 1, **dadurch gekennzeichnet, dass** die im Außenbereich (32) des Fahrzeugs (20) wirkenden Sende- und Empfangsmittel (25') im Türgriff (23) und/oder im Betätiger (29) der Heckklappe (28) integriert sind.

3. Schließsystem nach Ansprüche 1 oder 2, **dadurch gekennzeichnet, dass** im Fahrzeuginneren (22) sich eine Halterung für das Handy (10) befindet
und dass die inneren Sende- und Empfangsmittel (25) für die Nah-Kommunikation im Bereich der Halterung angeordnet sind.

4. Schließsystem nach einem der Ansprüche 1 bis 3, **dadurch gekennzeichnet, dass** die Nah-Kommunikation aus einem (blue-tooth-system 30) besteht.

## Claims

1. Closure systems for vehicles (20)
with an access authorisation system for unlocking or locking doors (24), flaps (28, 27) in the vehicle (20),
with a driving authorisation system for starting, operating and stopping an engine in the vehicle (20) and, as required, rendering a steering (18) of the vehicle (20) operative or inoperative
with a controller (33) for both systems that is operated by communication means
with the communication means consisting of a stationery/transmitting and receiving unit (25, 25') on the vehicle (20) and a mobile transmission and receiving unit in a wireless mobile telephone, referred to in the following as a handy (10),
and the controller (33) that checks the transmitted data and if successful renders the associated system operative or inoperative,
with the SIM card (15) for telephonic network operation of the handy (10), that can be inserted into the case of the handy (10) and removed again as necessary,
**characterized in that**,
the SIM card (15) is at the same time the carrier for the access authorisation data (16) of the communication,
that a handsfree system for bidirectional local communication of the handy (10) operating in the GHz range is arranged in the vehicle (20),
that in addition to external communication means (25') on the vehicle that can respond to the position of the handy (10) outside the vehicle,
internal communication means (25) is also arranged in the interior of the vehicle (22) that detects the position of the handy (10) within the vehicle,
that on the SIM card (15) there is also, in addition to the access authorisation data, also vehicle-specific driving authorisation data (16) for rendering the engine electronics operative for starting and operating the engine,
and that the driving authorisation data (16) of the SIM card (15) can be recorded and evaluated by means of the handy (10) operating in the GHz range.

2. Closure system in accordance with claim 1, **characterized in that** transmitting and receiving means (25') effective in the outside area (22) of the vehicle (20) is integrated in the door handle (23) and/or in the actuator (29) of the tailgate (28).

3. Closure system in accordance with claims 1 or 2, **characterized in that** the interior of the vehicle (22) a holder for the handy (10) is located and that the internal transmitting and receiving means (25) for local communication is arranged in the area of the holder.

4. Closure system in accordance with one of claims 1 to 3, **characterized in that** the local communication consists of a blue-tooth system (30).

## Revendications

1. Système de fermeture pour véhicules automobiles (20)
avec un système d'autorisation d'accès pour désarmer et armer des portes (24), des volets ou trappes (28, 27) dans un véhicule (20),
avec un système d'autorisation de roulage, pour démarrer, pour faire fonctionner et stopper un moteur dans un véhicule (20) et, le cas échéant, pour la mise en action et hors d'action d'une direction (18) du véhicule (20)
et avec une commande (33) pour les deux systèmes, qui sont exploités par des moyens de communication,
les moyens de communication étant formés d'une unité émettrice et réceptrice (25, 25') stationnaire, sur le véhicule (20), et d'une unité émettrice et réceptrice mobile, dans un téléphone portable sans fil, que l'on appelle ci-après un Handy (10),
et la commande (33) vérifie les données transmises et, en cas de réussite, met en action ou hors d'action le système afférent,
avec une carte SIM (15) pour le fonctionnement sur réseau téléphonique du Handy (10), pouvant être introduite dans le boîtier du Handy (10) et, en cas de besoin, en être de nouveau extraite,
**caractérisé en ce que**
la carte SIM (15) est en même temps la porteuse des données d'autorisation d'accès (16) de la communication,
**en ce que** dans le véhicule (20) est disposée une installation mains libres pour une communication proche, bidirectionnelle, travaillant dans la plage des GHz, du Handy (10),
**en ce que**, outre des moyens de communication extérieure (25'), sur le véhicule, qui réagissent à la position, dans l'espace extérieur, du Handy (10),
sont encore disposés, à l'intérieur (22) du véhicule, des moyens de communication intérieure (25) qui identifient la position dans l'espace intérieur du Handy (10),
**en ce que**, sur la carte SIM (15), outre les données d'autorisation d'accès sont également disposées des données d'autorisation de roulage (16) spécifiques au véhicule, pour la mise en action de l'électronique du moteur, pour le démarrage et pour le fonctionnement du moteur,
et **en ce que** les données d'autorisation de roulage (16) de la carte SIM (15) sont enregistrées et évaluées au moyen de la communication sur réseau, travaillant dans la plage des GHz, du Handy (10).

2. Système de fermeture selon la revendication 1, **caractérisé en ce que** les moyens d'émission et de réception (25'), agissant dans la zone extérieure (32) du véhicule (20), sont intégrés dans la poignée de portière (23) et/ou dans l'actionneur (29) du hayon (28).

3. Système de fermeture selon la revendication 1 ou 2, **caractérisé en ce qu'**une fixation pour le Handy (10) se trouve dans l'intérieur de véhicule (22)
et **en ce que** les moyens émetteurs et récepteurs intérieurs (25) pour la communication proche sont disposés dans la zone de la fixation.

4. Système de fermeture selon l'une des revendications 1 à 3, **caractérisé en ce que** la communication proche est composée d'un système blue-tooth (30).
